(19) Europäisches Patentamt / European Patent Office / Office européen des brevets

(11) **EP 3 932 550 A1**

(12) **EUROPEAN PATENT APPLICATION**
published in accordance with Art. 153(4) EPC

(43) Date of publication:
**05.01.2022 Bulletin 2022/01**

(21) Application number: **20778063.6**

(22) Date of filing: **10.03.2020**

(51) Int Cl.:
**B01J 35/04** (2006.01)    **B01D 53/94** (2006.01)
**F01N 3/10** (2006.01)    **F02M 21/02** (2006.01)
**B01J 23/63** (2006.01)

(86) International application number:
**PCT/JP2020/010230**

(87) International publication number:
**WO 2020/195778 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2019 JP 2019061780**

(71) Applicant: **CATALER CORPORATION**
**Kakegawa-shi, Shizuoka 437-1492 (JP)**

(72) Inventors:
• NOGUCHI, Takahiro
  Kakegawa-shi, Shizuoka 437-1492 (JP)
• ONOE, Ryota
  Kakegawa-shi, Shizuoka 437-1492 (JP)
• TASAKI, Ryo
  Kakegawa-shi, Shizuoka 437-1492 (JP)
• IWAI, Momoko
  Kakegawa-shi, Shizuoka 437-1492 (JP)
• MATSUSHITA, Yamato
  Kakegawa-shi, Shizuoka 437-1492 (JP)

(74) Representative: **Kramer Barske Schmidtchen Patentanwälte PartG mbB**
**European Patent Attorneys**
**Landsberger Strasse 300**
**80687 München (DE)**

(54) **CATALYST FOR PURIFYING EXHAUST GAS**

(57)    The present invention provides an exhaust gas purification catalyst having excellent removal performance of methane, which is chemically stable. An exhaust gas purification catalyst 5 according to the present invention includes a substrate 10 that divides cells 12 through which an exhaust gas flows and a catalyst layer 20 that is provided on a surface of the substrate 10. The catalyst layer 20 includes a palladium layer 21 containing palladium that extends from a first end part 10a which is an end part on the side of the cells 12 into which an exhaust gas flows to a second end part 10b which is an end part on the side from which an exhaust gas flows out, a platinum layer 22 containing platinum that extends from the second end part 10b to the first end part 10a, and a rhodium layer 23 containing rhodium that is laminated on both the palladium layer 21 and the platinum layer 22. The Pd layer 21 contains an alkaline earth metal at a content of 0.04 mol or more and 0.16 mol or less per 100 g of the Pd layer. In the Pt layer 22, an alkaline earth metal content per 100 g of the Pt layer is limited to 0.03 mol or less.

FIG.7

EP 3 932 550 A1

## Description

## Technical Field

The present invention relates to an exhaust gas purification catalyst used for purifying exhaust gas containing methane. Here, the present application claims priority on the basis of Japanese Patent Application No. 2019-061780, filed March 27, 2019, the entire content of which is incorporated herein by reference.

## Background Art

Exhaust gases discharged from the internal combustion engines (engines) of vehicles such as automobiles contain harmful gas components such as hydrocarbons (HC), carbon monoxide (CO), and nitrogen oxides ($NO_x$) along with particulate matter (PM) containing carbon as a main component. Exhaust gas regulations for regulating the discharge amount of these harmful gases and PM are strengthening year by year. Therefore, in internal combustion engines and their peripheral technologies, research has been conducted to reduce the discharge amount of harmful gases and PM from vehicles and the like.

As an example, in vehicles in recent years, in order to constrain an amount of $CO_2$ discharged from an internal combustion engine, drive control of the internal combustion engine that reduces the consumption of a fuel itself such as "Fuel Cut" (hereinafter referred to as F/C) and "Idling Stop" (stopping an operation of the internal combustion engine when the vehicle is stopped; hereinafter referred to as I/S) has been performed, and the frequency with which these controls are performed is also increasing. In addition, there are an increasing number of vehicles having an internal combustion engine that repeats stopping and restarting frequently such as hybrid vehicles. In addition, vehicles using natural gas internal combustion engines that use natural gas as a fuel are also being focused on since their $CO_2$ discharge amount per unit distance is low. Separately, harmful gases and PM of which amounts could not be reduced by the internal combustion engine are detoxified or collected with the exhaust gas purification catalyst and removed before the exhaust gas is discharged from the vehicle and the like. The exhaust gas purification catalyst efficiently functions as a three□way catalyst for removing the harmful gas components by purification when the air-fuel ratio is near a theoretical air fuel ratio (stoichiometric). Examples of the prior art related to an exhaust gas purification catalyst include Patent Literature 1 and 2.

Citation List

Patent Literature

Patent Literature 1: Japanese Patent Application Publication No. 2011-255378
Patent Literature 2: Japanese Patent Application Publication No. S59-041706

## Summary of Invention

Incidentally, an exhaust gas purification catalyst functions only after it has been heated to a temperature at which a precious metal catalyst is activated by the exhaust gas. In addition, HC discharged from the internal combustion engine contain methane ($CH_4$) which is chemically stable and unlikely to be decomposed at a low temperature, in addition to components such as aromatic compounds, olefins, and paraffins that readily combust at relatively low temperatures. Therefore, in I/S control, hybrid vehicles and the like, in an environment in which the temperature of the exhaust gas discharged from the internal combustion engine tends to decrease, it is difficult to remove methane from the exhaust gas discharged at cold start of the internal combustion engine to purify, and contaminating methane is released into the atmosphere. This can be a particularly important issue when using a natural gas internal combustion engine that uses natural gas including 80 mass% or more of methane as a fuel, although the $CO_2$ discharge amount per unit distance is low.

The present invention has been made in view of the above circumstances, and an object of the present invention is to provide an exhaust gas purification catalyst having excellent removal performance of methane, which is chemically stable.

According to the present invention, there is provided an exhaust gas purification catalyst that is configured to be disposed in an exhaust path of an internal combustion engine and purify an exhaust gas discharged from the internal combustion engine. The exhaust gas purification catalyst includes a substrate divided into cells through which an exhaust gas flows and a catalyst layer that is provided on a surface of the substrate. The catalyst layer includes a palladium (Pd) layer, a platinum (Pt) layer, and a rhodium (Rh) layer. The Pd layer extends from a first end part which is an end part on the side of the cells into which an exhaust gas flows to a second end part which is an end part on the side of the cells from which an exhaust gas flows out and contains Pd. The Pt layer extends from the second end part to the first end part and contains Pt. The Rh layer is laminated with both the Pd layer and the Pt layer and contains Rh. Here, the Pd layer contains an alkaline earth metal at a content of 0.04 mol or more and 0.16 mol or less per 100 g of the palladium layer. In addition, in the Pt layer, an alkaline earth metal content per 100 g of the platinum layer is limited to 0.03 mol or less.

In the exhaust gas purification catalyst, Pd, Pt, and Rh, which are three □way catalysts, are independently provided in separate layers. Thereby, it is possible to prevent alloying of precious metal catalysts even during long-term use of the exhaust gas purification catalyst, and it is possible for methane removal performance of individual precious metal catalysts to be exhibited more favorably. In the above configuration, the palladium layer is provided at the end part on the exhaust gas inflow side, and thereby a high methane removal rate can be achieved even under various exhaust gas conditions (for example, lean environment) that change according to control of the internal combustion engine and the like. In addition, in the above configuration, the platinum layer is provided at the end part of the exhaust gas discharge side, and thereby the platinum layer can exhibit extremely high methane removal performance under exhaust gas conditions alleviated by the rhodium layer (for example, close to the stoichiometric environment). In addition, in the above configuration, the rhodium layer is provided in contact with the palladium layer and the platinum layer, and thereby it is possible to improve methane removal performance compared with if the palladium layer and the platinum layer were formed alone.

Here, according to the detailed studies of the exhaust gas purification with the precious metal catalysts, the precious metal catalysts are easily oxidized and lose their activity (oxidation poisoning) by changing the air-fuel ratio of the internal combustion engine from a stoichiometric state to a lean state. Thus, when the exhaust gas atmosphere is returned from the lean state to the rich state, it is possible to recover from the oxidation poisoning state. The inventors conceived that, when methane is removed with the exhaust gas purification catalyst with a palladium layer disposed on the front side, by allowing the palladium layer to contain an alkaline earth metal that can function as an electron donor (reducing agent) for the precious metal, it can accelerate recovery of palladium from oxygen poisoning and therefore, steam reforming of methane due to palladium can be induced, and thus completed the present invention. In addition, hydrogen produced from methane in the palladium layer on the front side can contribute to prompt recovery of platinum from the oxidation poisoning state in the platinum layer disposed on the rear side. Thereby, an exhaust gas purification catalyst having higher purification performance than in the related art for methane contained in the exhaust gas with atmospheric changes is realized.

In a preferable aspect of the exhaust gas purification catalyst of the present technology, the platinum layer does not substantially contain an alkaline earth metal. When an alkaline earth metal is present near platinum that is in an oxidation poisoning state, the oxidation state of platinum can be stabilized, and prompt recovery from the oxidation poisoning state can be inhibited. In this regard, when methane purification is desired, it is preferable that no alkaline earth metal be present in the platinum layer.

In a preferable aspect of the exhaust gas purification catalyst of the present technology, in the palladium layer, the molar ratio of the alkaline earth metal with respect to the palladium is 1 or more and 3 or less. Thereby, the steam reforming reaction with the rhodium layer can be promoted, and the methane removal performance can be further improved.

In a preferable aspect of the exhaust gas purification catalyst of the present technology, the catalyst is used to purify an exhaust gas discharged from the internal combustion engine that uses natural gas as a fuel. When the internal combustion engine uses natural gas as a fuel, 80 mass% or more of HC contained in the exhaust gas can be methane. The exhaust gas purification catalyst of the present technology is preferable since the above effects are exhibited more preferably when it is applied to purify such an exhaust gas having a high methane content.

**Brief Description of Drawings**

[Fig. 1]

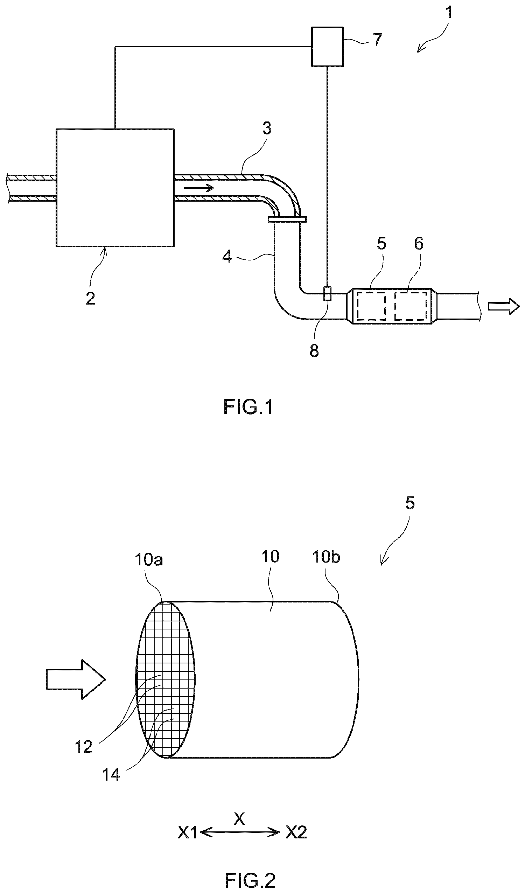

Fig. 1 is a schematic view showing a configuration of an exhaust gas purification system according to one embodiment.
[Fig. 2]
Fig. 2 is a perspective view schematically showing an exhaust gas purification catalyst according to one embodiment.
[Fig. 3]

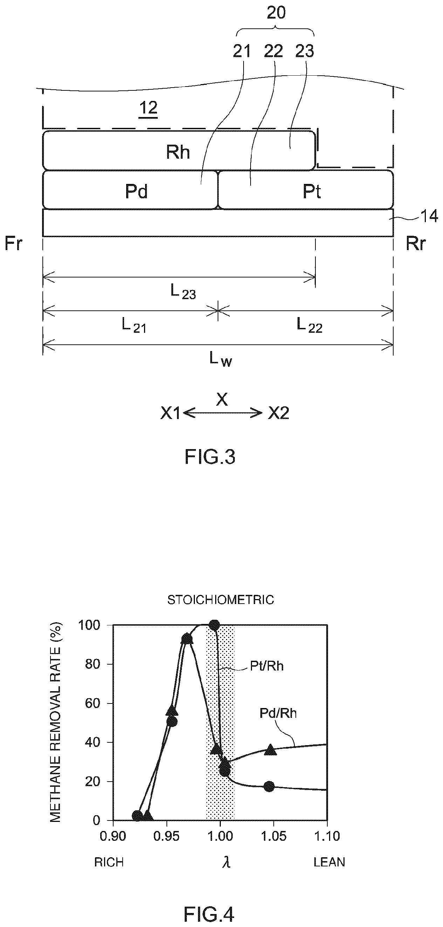

Fig. 3 is a partial cross-sectional view schematically showing a configuration of a catalyst layer in the exhaust gas purification catalyst according to one embodiment.
[Fig. 4]
Fig. 4 is a graph showing the relationship between an oxygen concentration of an inflow gas and a methane removal rate for catalyst bodies of reference examples.

[Fig. 5]

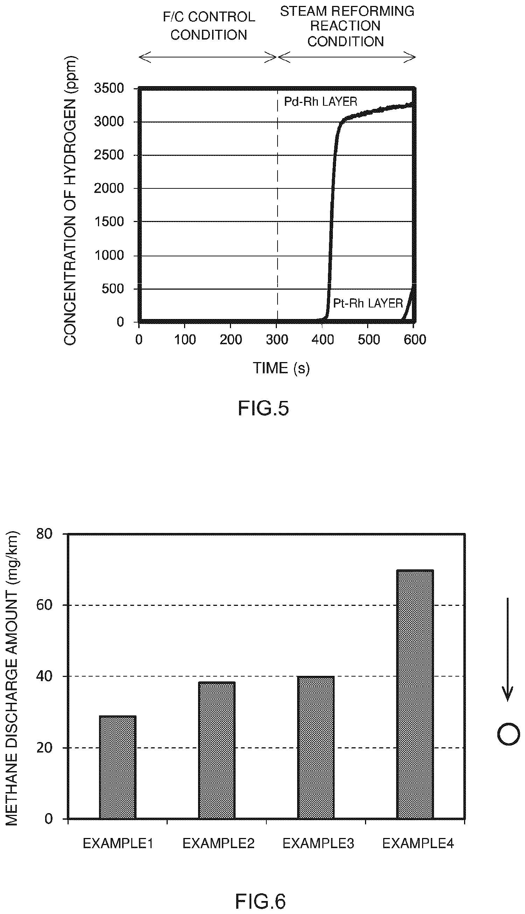

Fig. 5 is a graph showing the results obtained by evaluating a recovery state of methane removal performance after F/C control in a simulative manner for catalyst bodies of reference examples.
[Fig. 6]
Fig. 6 is a graph showing the methane discharge amount for catalyst bodies of examples.
[Fig. 7]

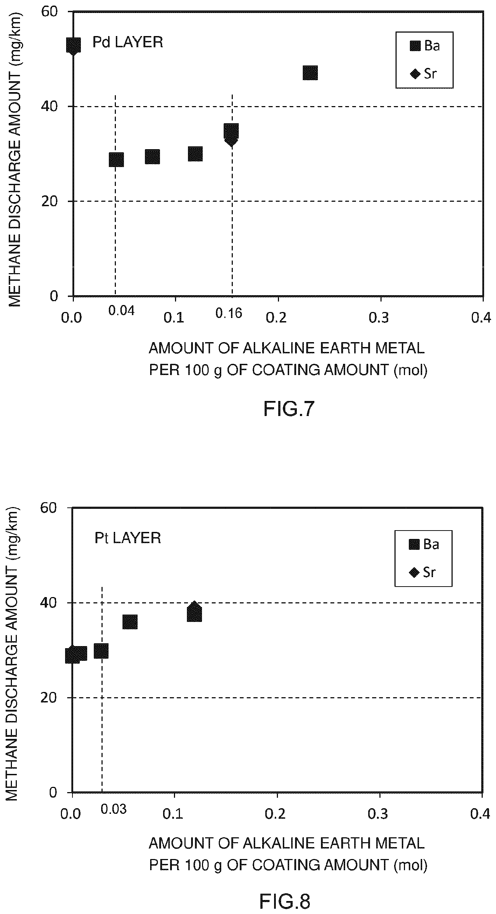

Fig. 7 is a graph showing the relationship between the amount of the alkaline earth metal per 100 g of a Pd layer and the methane discharge amount for catalyst bodies of examples.
[Fig. 8]
Fig. 8 is a graph showing the relationship between the amount of the alkaline earth metal per 100 g of a Pt layer and the methane discharge amount for catalyst bodies of examples.

## Description of Embodiments

Hereinafter, preferable embodiments of the present invention will be described with reference to the drawings. Here, matters other than the matters specifically set forth in the present specification and that are necessary for carrying out the present invention can be recognized by those skilled in the art as design matters based on the related art in the field. The present invention can be implemented based on content disclosed in this specification and common technical knowledge in the field. In addition, members and portions having the same functions are denoted with the same reference numerals in the following drawings, and redundant descriptions thereof will be omitted or simplified. The dimensional relationships (a length, a width, a thickness, and the like) in the drawings do not reflect actual dimensional relationships. Here, "A to B" indicating a numerical value range in this specification means "A or more and B or less."

Fig. 1 is a schematic view showing an exhaust gas purification system 1 according to one embodiment. The exhaust gas purification system 1 removes harmful components, for example, HC, CO, and $NO_x$, contained in an exhaust gas discharged from an internal combustion engine 2, and collects PM contained in the exhaust gas. The exhaust gas purification system 1 includes the internal combustion engine 2 and an exhaust path thereof. The exhaust gas purification system 1 according to the present embodiment includes the internal combustion engine 2, an exhaust path, an engine control unit (ECU) 7, and a sensor 8. The exhaust gas purification catalyst in the present technology is provided in the exhaust path of the internal combustion engine 2 as a component of the exhaust gas purification system 1. Thus, the exhaust gas flows in the exhaust path. The arrow in the drawings indicates the flow direction of the exhaust gas. Here, in this specification, the side close to the internal combustion engine 2 along the flow of the exhaust gas is called the upstream side, and the side away from the internal combustion engine 2 is called the downstream side.

An air-fuel mixture containing oxygen and a fuel gas is supplied to the internal combustion engine 2. The internal combustion engine 2 converts thermal energy generated by burning the air-fuel mixture into kinetic energy. The ratio between oxygen and the fuel gas supplied to the internal combustion engine 2 is controlled by the ECU 7. The burned air-fuel mixture becomes an exhaust gas and is discharged to the exhaust path. The internal combustion engine 2 having the configuration shown in Fig. 1 is mainly composed of an internal combustion engine that uses natural gas as a fuel.

The internal combustion engine 2 is connected to the exhaust path at an exhaust port (not shown). The exhaust path of the present embodiment is composed of an exhaust manifold 3 and an exhaust pipe 4. The internal combustion engine 2 is connected to the exhaust pipe 4 via the exhaust manifold 3. In the exhaust path, typically, a catalyst body 5 and a filter body 6 are provided. For example, the catalyst body 5 is an example of the exhaust gas purification catalyst in the present technology. The catalyst body 5 may include, for example, a two-way catalyst and other catalysts such as an HC selective reduction NOx catalyst, a NOx storage reduction catalyst, and a urea selective reduction NOx catalyst. The filter body 6 is not an essential configuration, and can be provided as necessary. When the filter body 6 is provided, its configuration may be the same as in the related art, and is not particularly limited. The filter body 6 may be, for example, a particulate filter (PF) that captures fine PM and reduces the number of discharged particles, or a catalyst particulate filter that is provided with a catalyst purification function by supporting a two-way or a three□way catalyst or the like thereon. Here, when arrangement of the catalyst in the catalyst particulate filter is the same as that of the exhaust gas purification catalyst according to the present technology, the filter body 6 is an example of the catalyst body 5. The arrangement of the catalyst body 5 and the filter body 6 is arbitrarily variable, and the catalyst body 5 and the filter body 6 may be independently provided alone or a plurality thereof may be provided.

The ECU 7 is electrically connected to the internal combustion engine 2 and the sensor 8. The ECU 7 receives signals from various sensors (for example, an oxygen sensor, a temperature sensor, and a pressure sensor) 8 that detect an operation state of the internal combustion engine 2 and control driving of the internal combustion engine 2. The configuration of the ECU 7 may be the same as in the related art, and is not particularly limited. The ECU 7 is, for example, a processor or an integrated circuit. An ECU 26 receives, for example, information such as an operation state of a vehicle or the like, and an amount, a temperature, and a pressure of the exhaust gas discharged from the internal combustion engine 2. In addition, for example, the ECU 7 performs operation control such as fuel injection control, ignition control, and intake air volume adjustment control on the internal combustion engine 2 according to the received information.

Fig. 2 is a perspective view of the catalyst body 5 according to one embodiment. X in the drawing indicates a first direction in the catalyst body 5. The catalyst body 5 is installed in the exhaust pipe 4 so that the first direction is along a flow direction of the exhaust gas. For convenience, focusing on the flow of the exhaust gas, one direction X1 among the first directions X is referred to as toward an exhaust gas inflow side (upstream side), and the other direction X2 is referred to as toward an exhaust gas outflow side (downstream side). In addition, for the catalyst body 5, one direction X1 may be referred to as toward a front (Fr) side, and the other direction X2 may be referred to as toward a rear (Rr) side. Fig. 3 is a schematic view of an enlarged part of a cross section of the catalyst body 5 according to one embodiment cut in the first direction X. The catalyst body 5 disclosed here includes, for example, a substrate 10 having a straight flow structure and a catalyst layer 20. Hereinafter, the substrate 10 and the catalyst layer 20 will be described in this order.

Various materials and forms used in this type of applications in the related art can be used for the substrate 10. The substrate 10 typically has a so-called honeycomb structure. Regarding the substrate 10, for example, a substrate made of a material having high heat resistance and high resistance to a sudden temperature change, which is represented by ceramics such as cordierite, aluminum titanate, and silicon carbide (SiC) or alloys such as stainless steel, can be suitably used. The outer shape of the substrate 10 is not particularly limited, and as an example, a cylindrical substrate (the present embodiment) may be mentioned. However, regarding the outer shape of the entire substrate, in addition to a cylindrical shape, an elliptical cylindrical shape, a polygonal pillar shape, an amorphous shape, a pellet shape, and the like may be used. In the present embodiment, the column axis direction of the cylindrical substrate 10 matches the first direction X. An end part of the substrate 10 in one direction X1 is a first end part 10a, and an end part in the other direction X2 is a second end part 10b. In this specification, the size of the component such as the substrate 10 in the first direction X is referred to as a length.

In the substrate 10, cells (cavities) 12 in the honeycomb structure extend in the first direction X. The cells 12 are through-holes which pass through the substrate 10 in the first direction X and serve as an exhaust gas flow path. The substrate 10 includes partition walls 14 that divide the cells 12 from each other. The shape of the cross section (hereinafter simply referred to as a "cross section") orthogonal to the first direction X of the cell 12, in other words, the structure of the partition wall 14 that partitions the cell is not particularly limited. For example, the shape of the cross section of the cells 12 may be various geometric shapes such as a rectangle such as a square, a parallelogram, an oblong, or a trapezoid, a triangle, other polygons (for example, a hexagon and an octagon), and a circle. The shape, size, and number of cells 12 can be appropriately designed in consideration of the flow rate and components of the exhaust gas supplied to the catalyst body 5.

The partition wall 14 faces the cell 12 and separates adjacent cells 12. It is preferable that the thickness (size in the direction orthogonal to the surface; the same applies hereinafter) of the partition wall 14 be thin because it is possible to increase the specific surface area of the substrate 10 and reduce the weight and reduce the heat capacity. The thickness of the partition walls 14 may be, for example, 1 mm or less, 0.75 mm or less, 0.5 mm or less, or 0.1 mm or less. On the other hand, when the partition wall 14 has an appropriate thickness, the strength and durability of the catalyst body 5 are improved. In consideration of this, the thickness of the partition walls 14 may be, for example, 0.01 mm or more, or 0.025 mm or more. In the catalyst body 5 of the present embodiment, no catalyst layer 20 is formed inside the partition wall 14. Therefore, the partition wall 14 can be a porous component, but its porosity may be small (for example, 30% or less). The substrate 10 in the embodiment may have a shape such as a so-called straight flow type and can be distinguished from a so-called wall flow type substrate in this regard. The length (total length) Lw of the partition walls 14 in the X direction is not particularly limited, and may be generally about 50 to 500 mm, for example, 100 to 200 mm. Here, in this specification, the volume of the substrate 10 means an apparent volume of the substrate. Therefore, the volume of the substrate 10 includes the volume of the cell 12 in addition to the substantial volume of the honeycomb structure (including the partition wall 14) as the framework.

As shown in Fig. 3, the catalyst layer 20 includes a palladium (Pd) layer 21, a platinum (Pt) layer 22, and a rhodium (Rh) layer 23. All of these catalyst layers 20 are disposed on the surface of the partition wall 14. The Pd layer 21 contains palladium (Pd) as a precious metal catalyst and an alloy mainly composed of Pd. The Pt layer 22 contains platinum (Pt) as a precious metal catalyst and an alloy mainly composed of Pt. The Rh layer 23 contains rhodium (Rh) as a precious metal catalyst and an alloy mainly composed of Rh. These catalyst layers 20 may contain other metal catalysts in addition to the above precious metal catalysts. Examples of such metal catalysts include platinum group catalysts (platinum group metals: PGM) such as Rh, Pd, Pt, ruthenium (Ru), osmium (Os), iridium (Ir), and alloys thereof, and in addition to these platinum group elements or in place of them, for example, metals including metallic elements such as iron (Fe), cobalt (Co), nickel (Ni), copper (Cu), silver (Ag), and gold (Au) or alloys thereof. However, the amount of Pd, Pt, and Rh in the metal catalysts contained in the Pd layer 21, the Pt layer 22, and the Rh layer 23 is 80 mass% or more, preferably 90 mass% or more, more preferably 95 mass% or more, and particularly preferably substantially 100 mass%, respectively. Naturally, inclusion of other metal catalysts that are inevitably incorporated is acceptable.

The Pd layer 21 and the Pt layer 22 have particularly high activity as an oxidation catalyst, and in the catalyst body 5, they exhibit a strong oxidizing action particularly for CO and HC among harmful components in the exhaust gas. The Rh layer 23 has particularly high activity as a reduction catalyst, and in the catalyst body 5, it exhibits a strong reduction action particularly for NOx among harmful components in the exhaust gas. The catalyst body 5 can have a function as a three□way catalyst by including the Pd layer 21, the Pt layer 22, and the Rh layer 23.

Here, when the platinum group catalyst is exposed to an oxidizing atmosphere, it easily binds to oxygen, and loses its catalytic activity. This is called "oxygen poisoning," and for example, Pd, Pt, and Rh are stabilized as oxides (PdO, PtO, and RhO). The activity of poisoned Pd, Pt, and Rh is recovered from when the atmosphere is reduced by returning it again to an equilibrium or a reducing atmosphere. Therefore, the three □way catalyst is mainly used for purifying the exhaust gas of the internal combustion engine 2 which burns in a stoichiometric state, which is a theoretical air fuel ratio.

However, even in the stoichiometric type internal combustion engine 2, when F/C control or the like is performed, the air-fuel ratio increases, the exhaust gas contains an excessive amount of oxygen, and the catalyst in the catalyst body 5 is easily poisoned. In addition, as described above, in I/S control, hybrid vehicles and the like, since the operation of the internal combustion engine 2 is frequently stopped, the temperature of the exhaust gas sent to the catalyst body 5 tends to decrease, and the activity of the catalyst in the catalyst body 5 may decrease.

In addition, for example, HC discharged from the internal combustion engine using gasoline as a fuel are mainly composed of components as aromatic components, olefins, and paraffins that readily combust at relatively low temperatures. Therefore, in the exhaust gas purification catalyst used in the internal combustion engine 2 using gasoline as a fuel, HC can be easily oxidized. For example, even if F/C control is performed, when the temperature of the exhaust gas reaches about 300°C or higher, a poisoned platinum group catalyst can be recovered to a highly active state (metal state) at an early stage since the HC is decomposed while consuming the oxygen of the poisoned platinum group catalyst. On the other hand, for example, in the stoichiometric type internal combustion engine 2 that uses natural gas as a fuel, the exhaust gas contains 80% or more of methane, which is chemically stable and unlikely to be decomposed, as HC. Therefore, when F/C control is performed, even if the exhaust gas is heated to about 300°C, HC (methane) is not decomposed, and contaminating methane is released into the atmosphere. In addition, recovery of the poisoned platinum group catalyst can be delayed. This can be an important issue in the spread of natural gas automobiles (CNG automobiles) which have been focused on in recent years because the $CO_2$ discharge amount per unit distance is small.

Here, in the present technology, characteristics of the Pd layer 21, the Pt layer 22, and the Rh layer 23 have been examined in detail, and purification characteristics of methane according to these catalyst layers 20 are found as follows. That is, the catalyst layer 20 in which the Pt layer 22 and the Rh layer 23 are laminated can exhibit particularly high purification performance with respect to methane in the exhaust gas discharged from the internal combustion engine burned in a stoichiometric state, which is the theoretical air fuel ratio. However, the catalyst layer 20 in which the Pt layer 22 and the Rh layer 23 are laminated has low methane removal performance when the exhaust gas is outside of the stoichiometric state. On the other hand, the catalyst layer 20 in which the Pd layer 21 and the Rh layer 23 are laminated can exhibit high methane removal performance for the exhaust gas from the internal combustion engine 2 burned under a wide range of conditions from the stoichiometric state to the lean state. In particular, a certain level of methane removal performance is exhibited even in a lean state, and the exhaust gas in a lean state can be appropriately adjusted to the stoichiometric state due to an oxidation reaction. Based on the above, in the present technology, the arrangement of the Pd layer 21, the Pt layer 22, and the Rh layer 23 on the substrate 10 is set as follows.

The Pd layer 21 extends from the first end part 10a which is an end part on the side into which the exhaust gas in the substrate 10 flows to the second end part 10b which is an end part on the side from which an exhaust gas flows out. The Pd layer 21 may be directly provided on the surface of the partition walls 14, and, for example, may be provided on an another layer such as the Rh layer 23 and the Pt layer 22, or may be provided below another layer such as the Rh layer 23 and the Pt layer 22. However, at least a part of the Pd layer 21 is laminated with the Rh layer 23. Here, regarding the terms "upper" and "lower" with respect to the lamination, the direction toward the partition walls 14 in the direction perpendicular to the surface of the partition walls 14 is "lower," and the direction away from the partition walls 14 is "upper."

The Pd layer 21 is disposed on the front side of the catalyst body 5, and thereby it is possible to reduce the adverse effect on the methane removal performance of the catalyst body 5 due to the change in the operation conditions of the internal combustion engine 2 and bring the atmosphere on the rear side closer to the stoichiometric state. In order for the above action to be sufficiently exhibited, when the total length Lw of the substrate 10 is 100%, the length $L_{21}$ of the Pd layer 21 may be a length of 25% or more from the first end part 10a, 30% or more, 35% or more, typically 40% or more, for example, 45% or more. However, inclusion of an excess amount of the Pd layer 21 can prevent the Pt layer 22 from sufficiently functioning. Therefore, the length $L_{21}$ of the Pd layer 21 may be generally 85% or less from the first end part 10a, 80% or less, 75% or less, typically 70% or less, 65% or less, for example, 60% or less.

Here, the amount of Pd in the Pd layer 21 is not particularly limited, for example, and the amount (hereinafter referred to as a "concentration" for the catalyst) per 1 liter (L) of the volume of the substrate in a portion in which the Pd layer 21 is formed in the first direction X is appropriately 0.1 g/L or more, preferably 0.5 g/L or more, and may be, for example, 1 g/L or more, and particularly 2 g/L or more. An excess content of Pd is not preferable because it can lead to Pd movement and aggregation. The concentration of Pd is appropriately 8 g/L or less and preferably 7 g/L or less, and may be, for example, 6 g/L or less.

Here, the Pd layer 21 contains an alkaline earth metal. The alkaline earth metal means four metals including calcium (Ca), strontium (Sr), barium (Ba), and radium (Ra), and any one of these may be contained or a combination of two or more thereof may be contained. All alkaline earth metals tend to form divalent cations because their valence electrons are in the s orbital of the outermost shell. In other words, when the alkaline earth metal is contained in the catalyst layer 20, it generally exhibits electron donating properties to adjacent PGMs. This makes it easier for PGMs to adsorb oxygen and be stabilized as oxides (in an oxygen-poisoned state). Here, among PGMs, Pd exhibits catalytic activity even in an oxide state (lean state), and therefore it is less affected by oxygen poisoning. In addition, the catalytic reaction of Pd can be promoted by electron donation from the alkaline earth metal, and the catalytic activity of Pd can be improved. Therefore, the alkaline earth metal can promote early recovery of Pd in a poisoned state from the poisoned state. The existence form of the alkaline earth metal in the Pd layer 21 is not particularly limited. For example, it may be present in the form of oxides, hydroxides, carbonates, nitrates, sulfates, phosphates, acetates, formates, oxalates, halides, or the like. In addition, for example, it may be present by being solid-dissolved in a carrier to be described below. The Alkaline earth metal can exhibit a reduction action on Pd when the environment becomes a lean atmosphere. As a result, methane removal performance originally possessed by the Pd layer 21 is quickly recovered, and subsidiarily, production of hydrogen from methane by Pd is promoted, and recovery of Pt contained in the Pt layer 22 is also promoted.

The Alkaline earth metal exhibits the above effect even if it is contained at a small amount in the Pd layer 21. However, in order to impart higher methane removal performance to the catalyst body 5, the content of the alkaline earth metal in the Pd layer 21 per 100 g of the palladium layer is appropriately 0.001 mol or more, 0.005 mol or more, or 0.01 mol or more, preferably 0.02 mol or more, or 0.04 mol or more, and may be, for example, 0.05 mol or more, 0.1 mol or more, or 0.15 mol or more. The upper limit of the content of the alkaline earth metal is not particularly limited, but in consideration of the balance between the addition amount and the effect of improving methane removal performance, the content of the alkaline earth metal per 100 g of the palladium layer is appropriately about 0.5 mol or less, preferably 0.3 mol or less or 0.2 mol or less, and may be, for example, 0.16 mol or less. Therefore, as an example, the methane discharge amount when a natural gas engine operates in a WLTC mode can be limited to about 40 mg/km or less.

Here, in consideration of efficiency of the action of the alkaline earth metal on Pd in the Pd layer 21, the molar ratio of the alkaline earth metal with respect to Pd contained in the Pd layer 21 is preferably high to some extent. The molar ratio may be, for example, 0.1 or more, and is appropriately 0.3 or more, preferably 0.6 or more, and more preferably 0.8 or more or 1.0 or more. In one embodiment, the molar ratio may be 1.5 or more or 2 or more. However, an excess content of the alkaline earth metal is not preferable because it may stabilize the oxidation state of Pd. For example, the molar ratio of the alkaline earth metal with respect to Pd is appropriately 5 or less and preferably 4 or less, and may be, for example, 3 or less.

The Pt layer 22 extends from the second end part 10b which is an end part on the side from which the exhaust gas in the substrate 10 flows out to the first end part 10a which is an end part on the side into which the exhaust gas flows. The Pt layer 22 may be directly provided on the surface of the partition walls 14, and, for example, may be provided on another layer such as the Rh layer 23 and the Pd layer 21, or may be provided below another layer such as the Rh layer 23 and the Pd layer 21. However, at least a part of the Pt layer 22 is laminated with the Rh layer 23. As described above, the Pd layer 21 is disposed on the front side, the Pt layer 22 is disposed on the rear side adjusted so that it is closer to the stoichiometric state, and thus it is possible to fully exhibit its high methane removal performance. The length $L_{22}$ of the Pt layer 22 is essentially unlimited. However, in order to dispose an appropriate amount of the Pd layer 21 on the front side, when the total length Lw of the substrate 10 is 100%, the length may be generally 90% or less from the second end part 10b, 85% or less, 80% or less, typically 75% or less, for example, 70% or less. On the other hand, it is desirable that as much of the Pt layer 22 as possible be disposed thereon in order that high methane removal performance be exhibited in the stoichiometric state. Therefore, the length $L_{22}$ of the Pt layer 22 may be a length of 20% or more from the second end part 10b, 25% or more, 30% or more, 35% or more, typically 40% or more, and may be, for example, 45% or more, and preferably 50% or more (exceeds 50%).

Here, the amount of Pt in the Pt layer 22 is not particularly limited, and for example, the concentration of Pt is appropriately 0.1 g/L or more and preferably 0.5 g/L or more, and may be, for example, 1 g/L or more, and particularly 2 g/L or more. An excess content of Pt is not preferable because it can lead to Pt movement and aggregation. The concentration of Pt is appropriately 8 g/L or less and preferably 7 g/L or less, and may be, for example, 6 g/L or less.

Here, unlike Pd, Pt does not exhibit activity in the oxide state (lean state), and thus is strongly affected by oxygen poisoning. Therefore, in the Pt layer 22, when there is an alkaline earth metal, this is not preferable because, if the atmosphere in which Pt is oxidatively poisoned changes to a rich state, the oxidation state of Pt is stabilized, and recovery of the catalytic activity can be prevented. In consideration of this, contrary to the Pd layer 21, it is preferable that the Pt layer 22 do not contain an alkaline earth metal. The content of the alkaline earth metal in the Pt layer 22 is typically limited to 0.03 mol or less per 100 g of the palladium layer. The content of the alkaline earth metal is preferably 0.02 mol or less, more preferably 0.01 mol or less or 0.005 mol or less, particularly preferably 0.001 mol or less, and for example, more preferably, the alkaline earth metal is not substantially contained. Here, the term that the Pt layer 22 does not substantially contain an alkaline earth metal means that no alkaline earth metal is detected in 5 or more different observation regions when X-ray photoelectron spectroscopy (XPS) analysis is performed, for example, on the cross section of the portion of the Pt layer 22 of the catalyst body 5 in the first direction.

Here, as described above, the action of the Pd layer 21 disposed on the front side of the Pt layer 22 with respect to the Pt layer 22 is important in order to suitably exhibit the function of the Pt layer 22. In consideration of this, the ratio A/B of the molar amount A of Pd contained in the unit volume of the substrate 10 to the molar amount B of Pt contained in the unit volume of the substrate 10 may be about 1 or more, is preferably 1.2 or more, more preferably 1.5 or more, and may be, for example, 1.75 or more or 2 or more. However, if the ratio A/B is too large, this is not preferable because the balance between the molar amount A of Pd and the molar amount B of Pt contained in the unit volume collapses, and Pd and Pt cannot cooperate favorably. In consideration of this, the ratio A/B may be about 3 or less, is preferably 2.8 or less, and may be, for example, 2.5 or less or 2.3 or less.

At least one layer of the Pd layer 21 and the Pt layer 22 is provided over the total length Lw of the substrate 10 in the first direction X. In other words, a total $(L_{21} + L_{22})$ of the length $L_{21}$ of the Pd layer 21 and the length $L_{22}$ of the Pt layer 22 is preferably 100% $\times$ Lw or more. Thereby, methane can be removed by fully using the substrate 10. The overlap $(L_{21} + L_{22} - Lw)$ between the Pd layer 21 and the Pt layer 22 is preferably 2% or more, preferably 5% or more, more preferably 10% or more, and particularly preferably 15% or more when the total length Lw of the substrate 10 is 100%. Thereby, the Pd layer 21 and the Pt layer 22 can be made to cooperate better. However, excessive overlap is not preferable because it can lead to excessive arrangement of the Pd layer 21. In addition, inclusion of an excess amount of the catalyst layer 20 is not preferable because the methane catalyst performance may not be able to be improved according to the amount of the catalyst layer 20 and weight reduction and reduction in costs tend to be hindered. Therefore, the overlap $(L_{21} + L_{22} - Lw)$ between the Pd layer 21 and the Pt layer 22 may be, for example, about 50% or less, 45% or less or 40% or less.

The Rh layer 23 is disposed so that it is laminated on both the Pd layer 21 and the Pt layer 22. As long as the Rh layer 23 is laminated on the Pd layer 21 and the Pt layer 22 in the thickness direction (vertical direction), other conditions are not particularly limited. The Rh layer 23 may be directly provided on the surface of the partition walls 14, and, for example, may be provided on another layer such as the Pd layer 21 and the Pt layer 22, or may be provided below another layer such as the Pd layer 21 and the Pt layer 22. Since the Rh layer 23 is laminated at least partially on both the Pd layer 21 and the Pt layer 22, it is possible to further improve methane removal performance of the Pd layer 21 and the Pt layer 22. For example, in a state in which the air-fuel ratio is slightly rich, the methane removal rate can be 80% or more, preferably 90% or more, and can be increased to, for example, 100%. In particular, the Pt layer 22 is disposed in combination with the Rh layer 23, and thereby it is possible to exhibit high methane removal performance (for example, methane removal rate 100%) under a wider range of air-fuel ratio conditions. In order for the action to be sufficiently exhibited and to provide favorable bonding to the Pd layer 21 and the Pt layer 22, when the total length Lw of the substrate 10 is 100%, the length $L_{23}$ of the Rh layer 23 may be about 50% or more of the length, 55% or more, 60% or more, typically 65% or more, 70% or more, for example, 80% or more. The upper limit of the length $L_{23}$ of the Rh layer 23 is not particularly limited, and may be, for example, 100%, 100% or less, 95% or less, or 90% or less.

Here, the amount of Rh in the Rh layer 23 is not particularly limited, for example, the concentration of Rh is appropriately 0.01 g/L or more and preferably 0.03 g/L or more, and may be, for example, 0.05 g/L or more or 0.1 g/L or more. An excess content of Rh is not preferable because methane catalyst performance may not be able to be improved according to the amount of Rh added, and reduction in costs tends to be hindered. The concentration of Rh is, for example, appropriately 3 g/L or less, and preferably 2 g/L or less, and may be, for example, 1 g/L or less.

The catalyst layer 20 can include a carrier supporting these catalysts in addition to precious metal catalysts contained in each of the Pd layer 21, the Pt layer 22, and the Rh layer 23. Regarding such carriers, carriers (typically, powders) known to be usable for this type of application in the related art can be appropriately used. For example, preferable examples of carriers include metal oxides such as alumina $(Al_2O_3)$, rare earth metal oxides, alkaline metal oxides, alkaline earth metal oxides, ceria $(CeO_2)$, zirconia $(ZrO_2)$, silica $(SiO_2)$, magnesia (MgO), and titania $(TiO_2)$, and solid solutions thereof, for example, ceria-zirconia composite oxides (CZ composite oxide: $CeO_2$-$ZrO_2$). These may be used alone or two or more thereof may be used in combination. Among these, it is preferable to use at least one of alumina and CZ composite oxides. The carrier may be a polycrystal or a single crystal.

The shape (outer shape) of the carrier is not particularly limited, and a powder carrier is preferably used in order to secure a larger specific surface area. For example, the average particle size of the carrier (the average particle size measured by a laser diffraction/scattering method) is, for example, 20 $\mu$m or less, typically 10 $\mu$m or less, and preferably, for example, 7 $\mu$m or less. If the average particle size of the carrier is too large, this is not preferable because the dispersibility of the precious metal supported on the carrier tends to decrease, and the purification performance of the catalyst deteriorates. The average particle size may be, for example, 5 $\mu$m or less, typically 3 $\mu$m or less. On the other hand, if the average particle size of the carrier is too small, this is not preferable because the heat resistance of the carrier itself formed of the carrier decreases and thus the heat resistance of the catalyst decreases. Therefore, it is usually preferable to use a carrier having an average particle size of about 0.1 $\mu$m or more, for example, 0.5 $\mu$m or more.

The amount of the precious metal catalyst supported on the carrier is not particularly limited. For example, the amount is appropriately in a range of 0.01 mass% to 10 mass% (for example, 0.05 mass% to 8 mass%, typically 0.015 mass% to 5 mass%) with respect to a total mass of the carrier. If the amount of the catalytic metal supported is too small, the catalytic activity obtained by the catalytic metal may be insufficient. On the other hand, if the amount of the catalytic metal supported is too large, the catalytic metal tends to cause grain growth, and at the same time, this is disadvantageous in terms of cost. In addition, a method of supporting the precious metal on the carrier is not particularly limited. For example, a carrier powder containing alumina or a CZ composite oxide is impregnated with an aqueous solution containing a salt including a precious metal catalyst element (for example, nitrate) or a precious metal complex (for example, tetraammine complex), and then dried and fired for preparation.

The catalyst layer 20 may appropriately contain an optional component in addition to a precious metal catalyst and the carrier of the precious metal catalyst. Examples of such an optional component include a co-catalyst in which a metal catalyst is not supported, an oxygen storage material having an oxygen storage capacity (OSC material), a $NO_x$ adsorbent having a $NO_x$ storage capacity, and a stabilizer. Examples of co-catalysts include alumina and silica. Examples of OSC materials include ceria, ceria-containing composite oxides, for example, CZ composite oxides.

Examples of stabilizers include rare earth elements such as lantern (La) and yttrium (Y), alkaline earth elements such as calcium (Ca) and barium (Ba), and other transition metal elements. Typically, these elements in the form of oxides are present in the catalyst layer. Among these, rare earth elements such as lantern and yttrium are suitably used as stabilizers because they can increase a specific surface area at a high temperature without impairing the catalyst function. Such carriers can be a polycrystal or a single crystal. Among the catalyst layers 20, the Pd layer 21 containing an oxidation catalyst preferably contains a stabilizer, for example, a barium element. Thereby, poisoning of the oxidation catalyst is suitably minimized and the catalytic activity can be improved. In addition, the dispersibility of the oxidation catalyst is improved, and the grain growth of the oxidation catalyst can be suppressed at a higher level.

The each of the coating amounts of the Pd layer 21, the Pt layer 22, and the Rh layer 23 is not particularly limited. In order to increase the fluidity of the exhaust gas in the partition wall 14 and reduce the pressure loss, the concentration for each layer is generally 200 g/L or less, preferably 180 g/L or less, for example, 150 g/L or less per 1 L of the volume of the substrate. On the other hand, in order to further improve purification performance of methane and other exhaust gases, the concentration for each layer is generally 10 g/L or more, preferably 30 g/L or more, for example, 50 g/L or more per 1 L of the volume of the substrate. When the above range is satisfied, it is possible to achieve both reduction of the pressure loss and improvement of exhaust gas purification performance at a higher level. Here, the ratio of the coating amounts of the Pd layer 21 and the Pt layer 22 is not particularly limited, and in order to reduce the pressure loss more favorably, for example, Pd layer: Pt layer = 30 to 70:70 to 30 may be employed. In the technology disclosed here, although the coating amount of the catalyst layer per 1 L of the volume of the substrate is the same, it is possible to further improve purification performance than in the related art. Here, the coating amount of the catalyst layer 20 means the mass of the catalyst layer 20 contained in the substrate per unit volume. However, regarding the volume of the substrate, only the substrate of a portion in which the catalyst layer 20 is formed in the first direction X is considered, and the substrate of a portion in which the catalyst layer 20 is not formed is not considered.

Here, the catalyst body 5 having the above configuration can be produced by, for example, the following method. First, the substrate 10 and a slurry for forming the catalyst layer 20 are prepared. Regarding the slurry, a Pd layer-forming slurry, a Pt layer-forming slurry, and a Rh layer-forming slurry are prepared. These catalyst layer-forming slurries contain metal catalyst components that are different from each other (typically a solution containing a metal catalyst as ions) as essential components, and each of them may contain other optional components, for example, a carrier, a co-catalyst, an OSC material, a binder, and various additives. Here, regarding the binder, an alumina sol, a silica sol, or the like can be used. Here, the properties (a viscosity, a solid content ratio, etc.) of the slurry may be appropriately adjusted according to the size of the substrate 10 used, the form of the cell 12 (the partition wall 14), desired properties of the catalyst layer 20, and the like.

For example, the average particle size of particles in the slurry can be about 1 $\mu$m or more, preferably 2 $\mu$m or more, more preferably 3 $\mu$m or more, and can be about 30 $\mu$m or less, preferably 20 $\mu$m or less, and more preferably 10 $\mu$m or less.

Next, the prepared catalyst layer-forming slurry is flowed into the cell 12 from the end part of the substrate 10, and is supplied to a predetermined length in the X direction. When the Pd layer 21 is formed, the slurry is flowed from the first end part 10a, and supplied to the length $L_{21}$ in the X2 direction. When the Pt layer 22 is formed, the slurry is flowed from the second end part 10b and supplied to the length $L_{22}$ in the X1 direction. When the Rh layer 23 is formed, the slurry may flow from either the first end part 10a or the second end part 10b, and may be supplied to a desired length $L_{23}$. In this case, the slurry may be suctioned from the end part on the opposite side. In addition, an excess slurry may be discharged by blowing air from the end part on the opposite side. Then, whenever one slurry is supplied, the substrate 10 to which the slurry is supplied is dried and fired at a predetermined temperature for a predetermined time. Thus, the particulate raw material is sintered and the porous catalyst layer 20 is formed. The drying and firing method may be the same as those when a conventional catalyst layer is formed. As shown in test examples to be described below, the Pd layer 21, the Pt layer 22, and the Rh layer 23 can be formed, for example, in order from the layers disposed below so that a desired catalyst layer structure can be obtained. Thereby, the catalyst layer 20 can be formed on the surface of the partition wall 14 of the substrate 10.

According to the catalyst body 5 having the above configuration, the exhaust gas discharged from the internal combustion engine 2 flows into the cell 12 from the first end part 10a of the substrate 10. The exhaust gas which has flowed into the cells 12 passes through the catalyst layer 20 formed on the surface of the partition walls 14 and is discharged from the second end part 10b. Here, at least the Pd layer 21 is disposed on the upstream side of the catalyst layer 20. In addition, the Rh layer 23 is laminated on at least a part of the Pd layer 21. Therefore, for example, even when the exhaust gas is outside of the stoichiometric state, harmful components containing methane are removed from the exhaust gas when passing through the Pd layer 21, and the atmosphere is brought closer to a stoichiometric state. In addition, the exhaust gas that has passed through the Pd layer 21 on which the Rh layer 23 is laminated passes through the Pt layer 22 on which the Rh layer 23 is laminated. Since the exhaust gas that has reached the Pt layer 22 and the Rh layer 23 is brought closer to a stoichiometric state, harmful components containing methane are removed from the exhaust gas at a high removal rate while passing through the Pt layer 22 on which the Rh layer 23 is laminated. In addition, since the Rh layer 23 is provided, NOx components in the exhaust gas are also removed. Thereby, the exhaust gas from which harmful components are removed is discharged from the end part 10b on the exhaust gas outflow side to the outside of the catalyst body 5.

While test examples related to the present invention will be described below, the present invention is not intended to be limited to what is shown in the following test examples.

[Reference Example 1]

Methane ($CH_4$) was removed using a catalyst body having a catalyst layer containing PGM alone, and thus the methane removal performance for each catalyst layer containing each PGM was confirmed.

First, as a substrate, as shown in Fig. 2, an open flow (straight flow) type cordierite substrate (an outer diameter of 120 mm, a total length of 115 mm, a bulk volume of 1.3 L, and a number of cells of 600 cpsi (cells/in$^2$)) was prepared.

In addition, slurries for forming a Pd layer, a Pt layer, and a Rh layer as catalyst layers on the substrate were prepared. Specifically, a palladium nitrate aqueous solution, alumina powder ($\gamma$-$Al_2O_3$), ceria zirconia composite oxide powder (CZ), and an alumina sol were mixed in deionized water to prepare a Pd slurry. In addition, a platinum nitrate aqueous solution, alumina powder ($\gamma$-$Al_2O_3$), ceria zirconia composite oxide powder (CZ), and an alumina sol were mixed in deionized water to prepare a Pt slurry. A rhodium nitrate aqueous solution, alumina powder ($\gamma$-$Al_2O_3$), ceria zirconia composite oxide powder (CZ), and an alumina sol were mixed in deionized water to prepare a Rh slurry.

Next, the prepared Pd slurry or Pt slurry was supplied from the front side end of the cordierite substrate, and an excess slurry was then suctioned from the front side end at a predetermined airflow speed, and thus the slurry was wash-coated on the entire surface (a total length in the length direction) of the partition wall of the substrate. Next, the substrate coated with the slurry was dried at 100°C and then fired at 500°C to prepare a catalyst body having a Pd layer or a Pt layer alone. Next, the prepared Rh slurry was supplied from the front side end of the substrate, and an excess slurry was then suctioned from the front side end at a predetermined airflow speed, and thus the Rh slurry was wash-coated with a length of 80% (0.8 × Lw) from the front side of the surface of the partition wall of the substrate. Then, the substrate coated with the slurry was dried at 100°C and then fired at 500°C to prepare a catalyst body having a Pd layer and a Rh layer and a catalyst body having a Pt layer and a Rh layer.

Here, per unit volume of the substrate, the coating amount of the Pd layer was 90 g/L, the coating amount of the Pt layer was 120 g/L, and the coating amount of the Rh layer was 100 g/L. In addition, per unit volume of the substrate, the concentration of Pd and the concentration of Pt were 3 g/L, and the concentration of Rh was 0.15 g/L.

(Evaluation of exhaust gas purification performance)

For each of the prepared catalyst bodies, the methane removal rate in the simulated exhaust gas of a natural gas (CNG) vehicle was examined using a catalyst evaluation device. The catalyst evaluation device included a mass flow controller, a heating furnace, an O2 sensor, and an engine exhaust gas analyzer, and could generate an engine exhaust gas in a simulative manner and could analyze components of a gas inflowing into a catalyst body and a gas outflowing from a catalyst body. Specifically, the gas components shown in the following Table 1 were mixed in a catalyst evaluation device at a predetermined ratio, and an exhaust gas of a CNG vehicle was generated in a simulative manner. As shown in Table 1, in the simulated exhaust gas, the oxygen concentration was changed, and thereby the ratio ($\lambda$) of the oxidizing gas component to the reducing gas component was changed from rich (0.9) to lean (1.1). Here, the ratio of the oxidizing gas component to the reducing gas component indicated that λ = 1 was stoichiometric and the amount of the oxidizing gas was the same as the amount of the reducing gas. The above gas was supplied to the catalyst body at 500°C, and the methane removal rate of the catalyst body was measured. The methane removal rate was obtained by measuring a methane concentration PI of the simulated exhaust gas flowing into the catalyst body and a methane concentration P2 of the simulated exhaust gas flowing out from the catalyst body and calculating the following formula:

$$\text{methane removal rate (\%)} = [(P1 - P2)/P1] \times 100$$

therefrom. The results are shown in Fig. 4.

[Table 1]

Table 1

| Sets of conditions | $CO_2$ (vol%) | $O_2$ (vol%) | CO (ppm) | NO (ppm) | $H_2$ (ppm) | $CH_4$ (ppm) | $H_2O$ (vol%) | $N_2$ | Total flow rate (ml/min) |
|---|---|---|---|---|---|---|---|---|---|
| 1 | | 0 | | | | | | | |
| 2 | | 0.555 | | | | | | | |
| 3 | | 0.835 | | | | | | | |
| 4 | 14 | 1.150 | 15,000 | 1,000 | 5,000 | 1,650 | 11 | Balance | 20,000 |
| 5 | | 1.390 | | | | | | | |
| 6 | | 2.225 | | | | | | | |
| 7 | | 5.555 | | | | | | | |

Fig. 4 is a graph showing the relationship between the oxygen concentration of the inflow gas and the methane removal rate for catalyst bodies each having a Pd layer-Rh layer and a Pt layer-Rh layer. It was confirmed that the Pd layer-Rh layer and the Pt layer-Rh layer achieved a methane removal rate close to 100% in the stoichiometric state. In particular, it was found that the Pt layer-Rh layer in the stoichiometric state exhibited extremely higher methane removal performance than the Pd layer-Rh layer. In addition, it was found that the Pd layer-Rh layer in the rich state or the lean state other than the stoichiometric state exhibited higher methane removal performance than the Pt layer-Rh layer, and a stable high methane removal rate was obtained particularly in the lean state which was an oxidizing atmosphere.

(Steam reforming reaction simulation test after F/C)

For the catalyst body prepared above, it was examined whether a steam reforming reaction using methane as a raw material could occur with the catalyst body being oxygen-poisoned. Specifically, using the same catalyst evaluation device as above, first, a lean condition exhaust gas simulating an exhaust gas from an F/C controlled engine was supplied to the catalyst body for 5 minutes, and the catalyst body was oxygen-poisoned (condition 1). Next, the catalyst body was exposed to conditions in which a steam reforming reaction could occur for 5 minutes, and it was examined whether a water vapor reaction proceeded (condition 2). The temperature of the gas flowing into the catalyst body was fixed at 300°C, and in the lean conditions, the exhaust gas (20% $O_2/N_2$) of the component shown in the condition 1 of the following Table 2 was sent to the catalyst body. In addition, in steam reforming conditions, the gas ($CH_4$ + $H_2O/N_2$) of the component shown in the condition 2 of Table 2 was sent to the catalyst body. Thereby, the concentration of hydrogen (H2) in the gas discharged from the catalyst body was measured, and the results are shown in Fig. 5.

[Table 2]

Table 2

| Set of conditions | CH$_4$ (ppm) | O$_2$ (vol%) | H$_2$O (vol%) | N$_2$ | Total flow rate (ml/min) |
|---|---|---|---|---|---|
| 1 | 0 | 20 | 0 | Balance | 20,000 |
| 2 | 1,500 | 0 | 10 | | |

In the above simulation test, in the case where the oxygen-poisoned catalyst body under the condition 1 has catalytic activity, hydrogen is produced from methane supplied in the condition 2 through one of the following steam reforming reactions.

$$CH_4 + H_2O \rightarrow CO + 3H_2 \qquad (1)$$

$$CH_4 + 2H_2O \rightarrow CO_2 + 4H_2 \qquad (2)$$

$$CO + H_2O \rightarrow CO_2 + H_2 \qquad (3)$$

As shown in Fig. 5, it was confirmed that the catalyst body having a Pd layer-Rh layer was oxygen-poisoned at 300°C and then started to produce hydrogen in about 2 minutes, and recovered from the oxygen-poisoned state at an early stage. In addition, it was confirmed that a time from when the catalyst body having a Pt layer-Rh layer was oxygen-poisoned until it started to produce hydrogen was about 5 minutes. For example, 300°C corresponded to a relatively low exhaust temperature when the automobile engine was idle, and the like. Consequently, it was found that, even if the catalyst body having a Pd layer-Rh layer was oxygen-poisoned, for example, when the vehicle performed F/C control on an engine, it could be recovered from the poisoned state at a low temperature earlier than the catalyst body having a Pt layer-Rh layer.

In the exhaust gas purification catalyst, the change in the atmosphere according to engine operation conditions was larger on the front side than the rear side. For example, even in a stoichiometric direct injection vehicle, due to F/C control, I/S control or the like in the engine, the front side is often exposed to a lean atmosphere. In addition, on the rear side, due to the progress of the catalytic reaction by the catalyst layer disposed on the front side, the change in the atmosphere is alleviated, and adjustment to closer to a stoichiometric state in the atmosphere can be performed in many cases. Therefore, it can be said that, when arrangement of the catalyst layer on the catalyst body is examined, on the front side, which is easily affected by the change in the engine operation conditions, it is preferable to provide a Pd layer-Rh layer which is recovered quickly even if it is oxygen-poisoned and exhibits favorable methane removal performance under a wide range of atmosphere conditions. In addition, it can be said that, on the rear side in which the atmosphere conditions are alleviated by the catalyst body disposed on the front side, it is preferable to provide a Pd layer-Rh layer exhibiting excellent methane removal performance in the stoichiometric state.

[Reference Example 2]

Methane (CH$_4$) was removed using catalyst bodies with different arrangements while the amounts of catalytic metals used in the Pd layer, the Pt layer, and the Rh layer as catalyst layers were the same, and thus a difference in methane removal performance depending on the arrangement of the catalyst layers was confirmed.

First, as a substrate, an open flow (straight flow) type cordierite substrate (an outer diameter of 120 mm, a total length of 115 mm, a bulk volume of 1.3 L, and a number of cells of 600 cpsi (cells/in$^2$)) was prepared.

In addition, in the same manner as in Reference Example 1, slurries for forming a Pd layer, a Pt layer, and a Rh layer as catalyst layers on the substrate were prepared. Specifically, a palladium nitrate aqueous solution, alumina powder ($\gamma$-Al$_2$O$_3$), ceria zirconia composite oxide powder (CZ), and an alumina sol were mixed in deionized water to prepare a Pd slurry. In addition, a platinum nitrate aqueous solution, alumina powder ($\gamma$-Al$_2$O$_3$), ceria zirconia composite oxide powder (CZ), and an alumina sol were mixed in deionized water to prepare a Pt slurry. A rhodium nitrate aqueous solution, alumina powder ($\gamma$-Al$_2$O$_3$), ceria zirconia composite oxide powder (CZ), and an alumina sol were mixed in deionized water to prepare a Rh slurry.

Next, as shown in the following Table 1, using the prepared slurries, the Pd layer, the Pt layer, and the Rh layer were formed as catalyst layers with different configurations of the first catalyst layer, and thereby catalyst bodies of Examples 1 to 4 were prepared. The Pd layer, the Pt layer, and the Rh layer were all formed by drying and firing each layer according to the same suction method as in the above reference example. Fig. 3 shows a configuration of the catalyst body of Example 1.

(Example 1)

That is, the Pd slurry was supplied over a length of 50% (0.5 × Lw) from the front side end of the substrate, an excess slurry was then suctioned from the front side at a predetermined airflow speed, and dried at 100°C and then fired at 500°C, and thereby a first Pd layer was formed. Next, the Pt slurry was supplied over a length of 50% (0.5 × Lw) from the rear side of the substrate and an excess slurry was then suctioned from the rear side at a predetermined airflow speed, and dried at 100°C and then fired at 500°C, and thereby a first Pt coating layer was formed. Then, the Rh slurry was supplied over a length of 80% (0.8 × Lw) from the front side of the substrate and an excess slurry was then suctioned from the front side at a predetermined airflow speed and dried at 100°C and then fired at 500°C and thereby a second Rh coating layer was formed. Thereby, a catalyst body of Example 1 was obtained. The concentration of the catalyst per unit volume of the substrate in the first Pd layer and Pt layer was 3 g/L. The concentration of the catalyst per unit volume of the substrate in the second Rh coating layer was 0.15 g/L. In addition, per unit volume of the substrate, the coating amount of the Pd layer was 90 g/L, the coating amount of the Pt layer was 120 g/L, and the coating amount of the Rh layer was 100 g/L.

(Example 2)

A catalyst body of Example 2 was obtained in the same manner as in Example 1 except that, in the first layer, the slurry supplied to the front side of the substrate was changed to the Pt slurry, and the slurry supplied to the rear side was changed to the Pd slurry.

(Example 3)

A catalyst body of Example 3 was obtained in the same manner as in Example 1 except that, in the first layer, both the slurry supplied to the front side of the substrate and the slurry supplied to the rear side were changed to the Pd slurry.

(Example 4)

A catalyst body of Example 4 was obtained in the same manner as in Example 1 except that, in the first layer, both the slurry supplied to the front side of the substrate and the slurry supplied to the rear side were changed to the Pt slurry.

(Evaluation of exhaust gas purification performance)

For the prepared catalyst bodies of the examples, the purification performance of methane gas in a natural gas (CNG) vehicle was evaluated. Specifically, the catalyst body of each example was installed in the exhaust path of a vehicle with an in-cylinder direct injection natural gas engine that burns at a theoretical air fuel ratio (stoichiometric CNG direct injection vehicle, 1.5 L). Then, the methane discharge amount (mg/km) when this vehicle was driven according to WLTC (Worldwide harmonized Light duty Test Cycle) was measured. The methane discharge amount was calculated from the measurement result of the methane concentration in the exhaust gas discharged from the catalyst body, based on the following formula: methane discharge amount (mg/km) = methane concentration in exhaust gas (mg/L) × exhaust gas amount(L) ÷ travel distance (km). The results are shown in the following Table 3 and Fig. 6.

[Table 3]

Table 3

| Example | First layer on Fr side | | First layer on Rr side | | Second layer | | Methane discharge amount (mg/km) |
|---|---|---|---|---|---|---|---|
| | Type of PGM | Amount of PGM (g/L) | Type of PGM | Amount of PGM (g/L) | Type of PGM | Amount of PGM (g/L) | |
| 1 | Pd | 3 | Pt | 3 | Rh | 0.15 | 28.8 |
| 2 | Pt | 3 | Pd | 3 | Rh | 0.15 | 38.2 |
| 3 | Pd | 3 | Pd | 3 | Rh | 0.15 | 39.9 |

(continued)

| Example | First layer on Fr side | | First layer on Rr side | | Second layer | | Methane discharge amount (mg/km) |
|---|---|---|---|---|---|---|---|
| | Type of PGM | Amount of PGM (g/L) | Type of PGM | Amount of PGM (g/L) | Type of PGM | Amount of PGM (g/L) | |
| 4 | Pt | 3 | Pt | 3 | Rh | 0.15 | 69.7 |

Comparing Example 1 and Example 2, it was found that, on the front side in the first layer, the methane discharge amount was significantly lower in the Pd layer than in the Pt layer. As confirmed in Reference Example 1, while the Pd layer-Rh layer exhibited high methane removal performance even in the lean state, the Pt layer-Rh layer exhibited high methane removal performance only in a very limited stoichiometric state. In addition, the Pd layer-Rh layer was quickly recovered from the poisoned state even if oxygen poisoning was performed. In this test also, it was confirmed that, in order to reduce the methane discharge amount, it is preferable to dispose the Pd layer on the front side and the Pt layer on the rear side for the first Pd layer and Pt layer. In addition, as can be clearly understood from comparison between Example 1 and Example 3, when the front side is the Pd layer, the environment on the rear side is improved to a state approximately close to the stoichiometric state. Therefore, it was confirmed that it is preferable to provide the Pt layer rather than the Pd layer on the rear side in order to improve the methane removal performance. Here, as shown in Example 4, it was found that, even if the Pt layer is provided on the rear side in the first layer, when the Pd layer is not provided on the front side, the Pt layer on the rear side do not effectively function for methane purification. Therefore, in consideration of methane purification, it can be understood that arrangement of the Pd layer on the front side and the Pt layer on the rear side is best.

[Test Example 1]

Methane ($CH_4$) was removed using a catalyst body in which the arrangement of a Pd layer, a Pt layer, and a Rh layer as catalyst layers was made constant, and a barium (Ba) component or a strontium (Sr) component which was an alkaline earth metal component was added to the Pd layer and the Pt layer in varying addition amounts, and thus a difference in the methane removal performance was confirmed. As a substrate, as in Reference Example 2, an open flow (straight honeycomb) type cordierite substrate (an outer diameter of 120 mm, a total length of 115 mm, a bulk volume of 1.3 L, and a number of cells of 600 cpsi (cells/in$^2$)) was prepared.

In addition, slurries for forming a Pd layer, a Pt layer, and a Rh layer as catalyst layers on the substrate were prepared. Specifically, since Ba or Sr was not added to the Rh layer, the Rh slurry was prepared in the same manner as in Reference Examples 1 and 2. In other words, when a layer was formed so that the coating amount of the Rh layer per unit volume of the substrate was 100 g/L, formulation of Rh layer raw materials was adjusted so that the concentration of Rh was 0.15 g/L.

In addition, for the Pd layer to which Ba or Sr was not added, when a layer was formed using the same raw materials as in Reference Examples 1 and 2 so that the coating amount of the Pd layer was 90 g/L, formulation of Pd layer raw materials was adjusted so that the concentration of Pd was 4 g/L, and thereby a Pd slurry was prepared.

For the Pt layer to which Ba or Sr was not added, when a layer was formed using the same raw materials as in Reference Examples 1 and 2 so that the coating amount of the Pt layer was 120 g/L, formulation of Pt layer raw materials was adjusted so that the concentration of Pt was 1.5 g/L, and thereby a Pt slurry was prepared. That is, in order to facilitate understanding of the change in the methane discharge amount, the concentration of Pt, which had high methane removal performance, was modest compared with the reference example.

For the Pd layer to which Ba or Sr was added, when a layer was formed so that the coating amount of the Pd layer was 90 g/L using a Ba salt (here, barium nitrate powder) or a Sr salt (here, strontium nitrate powder) in addition to the same raw materials as in Reference Examples 1 and 2, formulation of Pd layer raw materials was adjusted so that the concentration of Pd was 4 g/L, and the concentration of Ba or Sr was the ratio (0 to 30 g/L) shown in Table 4, and thereby a Pd slurry was prepared. For the Pt layer to which Ba or Sr was added, when a layer was formed so that the coating amount of the Pt layer was 120 g/L using a Ba salt (here, barium nitrate powder) or a Sr salt (here, strontium nitrate powder) in addition to the same raw materials as in Reference Examples 1 and 2, formulation of Pt layer raw materials was adjusted so that the concentration of Pt was 1.5 g/L and the concentration of Ba or Sr was the ratio (0 to 20 g/L) shown in Table 4, and thereby a Pt slurry was prepared.

Next, using the prepared slurry, a Pd layer, a Pt layer, and a Rh layer as catalyst layers were formed and disposed in the same manner as in Example 1 of Reference Example 2, and thereby a catalyst body was prepared. The prepared slurries were used in combinations shown in Table 4. In addition, the Pd layer, the Pt layer, and the Rh layer each were formed by wash-coating and drying and firing for each layer according to the same suction method as in Reference Example 2.

That is, the Pd slurry was supplied over a length of 50% (0.5 × Lw) from the front side end of the substrate and then suctioned at a predetermined airflow speed, dried at 100°C and then fired at 500°C, and thereby a first Pd layer was formed. Next, the Pt slurry was supplied over a length of 50% (0.5 × Lw) from the rear side of the substrate, and then suctioned at a predetermined airflow speed, dried at 100°C and then fired at 500°C, and thereby a first Pt coating layer was formed. Then, the Rh slurry was supplied over a length of 80% (0.8 × Lw) from the rear side of the substrate and then suctioned at a predetermined airflow speed, dried at 100°C and then fired at 500°C, and thereby a second Rh coating layer was formed. Catalyst bodies of Examples 1 to 13 were obtained using the Pd slurry, the Pt slurry, and the Rh slurry of each example.

(Evaluation of exhaust gas purification performance)

For the prepared catalyst bodies of the examples, the purification performance of methane gas in a natural gas (CNG) vehicle was evaluated in the same manner as in Reference Example 2. Specifically, the catalyst body of each example was installed in the exhaust path of a vehicle with an in-cylinder direct injection natural gas engine that burns at a theoretical air fuel ratio (stoichiometric CNG direct injection vehicle, 1.5 L). Then, the methane discharge amount (mg/km) when this vehicle was driven in a WLTC (Worldwide harmonized Light duty Test Cycle) mode was measured. The results are shown in the following Table 4, and Fig. 7 and Fig. 8. "Concentration (%) in catalyst layer" in Table 4 is the result obtained by calculating the content (concentration, mass%) of Ba or Sr in the catalyst layer.

[Table 4]

Table 4

| Example | Pd layer (first layer on Fr side) | | | | Pt layer (first layer on Rr side) | | | Methane discharge amount (mg/km) |
|---|---|---|---|---|---|---|---|---|
| | Concentration of Pd (g/L) | Concentration of Ba (g/L) | Ba/Pd molar ratio | Ba (mol)/coating layer 100 g | Concentration of Pt (g/L) | Concentration of Ba (g/L) | Ba (mol)/coating layer 100 g | |
| 1 | 4.0 | 0.0 | 0.0 | 0.00 | 1.5 | 0 | 0 | 53.01 |
| 2 | 4.0 | 5.0 | 1.0 | 0.04 | 1.5 | 0 | 0 | 28.80 |
| 3 | 4.0 | 10 | 1.9 | 0.08 | 1.5 | 0 | 0 | 29.45 |
| 4 | 4.0 | 15 | 2.9 | 0.12 | 1.5 | 0 | 0 | 30.04 |
| 5 | 4.0 | 20 | 3.9 | 0.16 | 1.5 | 0 | 0 | 34.88 |
| 6 | 4.0 | 30 | 5.8 | 0.24 | 1.5 | 0 | 0 | 47.12 |
| <2> | 4.0 | 5.0 | 1.0 | 0.04 | 1.5 | 0 | 0 | 28.80 |
| 7 | 4.0 | 5.0 | 1.0 | 0.04 | 1.5 | 1.0 | 0.01 | 29.33 |
| 8 | 4.0 | 5.0 | 1.0 | 0.04 | 1.5 | 5.0 | 0.03 | 29.84 |
| 9 | 4.0 | 5.0 | 1.0 | 0.04 | 1.5 | 10 | 0.06 | 35.98 |
| 10 | 4.0 | 5.0 | 1.0 | 0.04 | 1.5 | 20 | 0.12 | 37.54 |

| Example | Pd layer (first layer on Fr side) | | | | Pt layer (first layer on Rr side) | | | Methane discharge amount (mg/km) |
|---|---|---|---|---|---|---|---|---|
| | Concentration of Pd (g/L) | Concentration of Sr (g/L) | Sr/Pd molar ratio | Sr (mol)/coating layer 100 g | Concentration of Pt (g/L) | Concentration of Sr (g/L) | Sr (mol)/coating layer 100 g | |
| <1> | 4.0 | 0.0 | 0.0 | 0.00 | 1.5 | 0 | 0 | 53.01 |
| 11 | 4.0 | 3.0 | 0.9 | 0.04 | 1.5 | 0 | 0 | 29.80 |
| 12 | 4.0 | 13.0 | 3.9 | 0.16 | 1.5 | 0 | 0 | 32.88 |
| 13 | 4.0 | 3.0 | 0.9 | 0.04 | 1.5 | 13.0 | 0.12 | 39.04 |

Examples 1 to 6 were catalyst bodies formed by adding Ba to the Pd layer and changing the addition amount at 0 to 30 g/L (in other words, 0 to 0.24 mol per 100 g of the Pd layer) per unit volume of the substrate. Fig. 7 is a graph showing the relationship between the measurement results of the methane discharge amount and the amount of Ba (alkaline earth metal) added to the Pd layer for the catalyst bodies of Examples 1 to 6. Comparing with Example 1 to which Ba was not added, it was found that the methane discharge amount was reduced in all examples in which Ba was added. It was found that adding Ba to the Pd layer was effective in improving methane removal performance of the catalyst body. It can be said that, although the effect of improving methane removal performance is obtained even if the amount of Ba added is very small, in order for the effect to be clearly exhibited, the amount added is about 5 g/L, that is, a ratio of about 0.04 mol per 100 g of the Pd layer. It was found that, when the amount of Ba added was increased to 30 g/L, that is, about 0.24 mol per 100 g of the Pd layer, the effect of improving methane removal performance was reduced. Therefore, it can be said that the amount of Ba added may be less than 30 g/L, and may be, for example, 0.24 mol or less per 100 g of the Pd layer. The amount of Ba added may be, for example, about 0.04 mol or more and 0.16 mol or less per 100 g of the Pd layer.

Here, the catalyst bodies of Examples 11 and 12 were examples in which Sr was added at a ratio of 3 g/L or 13 g/L in place of Ba, and the results are shown in Fig. 7. It was found that the methane removal performances of the catalyst bodies of Examples 11 and 12 were almost the same as that when Ba was added, and the same effects were obtained using an element other than Ba as long as the element was an alkaline earth metal.

Therefore, as Examples 7 to 10, the methane removal performance of catalyst bodies formed by adding Ba at a ratio of 5 g/L to the Pd layer and changing the amount of Ba added to the Pt layer at 1 to 20 g/L per unit volume of the substrate (0.01 to 0.12 mol per 100 g of the Pd layer) was examined. In addition, as Example 13, the methane removal performance of the catalyst body in which, in place of Ba, 3 g/L (0.04 mol per 100 g of the Pd layer) of Sr was added to the Pd layer and 13 g/L (0.12 mol per 100 g of the Pt layer) of Sr was added to the Pt layer was examined. Fig. 8 is a graph showing the relationship between the measurement result of the methane discharge amount and the amount of the alkaline earth metal (Ba or Sr) added to the Pt layer for the catalyst bodies of Examples 2, 7 to 11, and 13.

Comparing Examples 2, and 7 to 10, it was found that, compared with Example 2 in which Ba was added to the Pd layer but Ba was not added to the Pt layer, the methane discharge amount increased in all examples in which Ba was added to both the Pd layer and the Pt layer. Similarly, comparing Examples 11 and 13, it was found that, compared with Example 11 in which Sr was added to the Pd layer but Sr was not added to the Pt layer, in Example 13 in which Sr was added to both the Pd layer and the Pt layer, the methane discharge amount increased to the same extent in the case of Ba. Therefore, it was found that, although it was effective to add an alkaline earth metal element to the Pd layer in order to improve the methane removal performance of the catalyst body, adding an alkaline earth metal element to both the Pd layer and the Pt layer was not effective, and instead the methane removal performance of the catalyst body was impaired. It can be said that, although the amount of alkaline earth metal elements added to the Pt layer is acceptable as long as it was small, for example, the addition amount is limited to 0.05 mol or less, preferably, 0.03 mol or less per 100 g of the Pd layer.

While specific examples of the present invention have been described above in detail, these are only examples, and do not limit the scope of claims. The technology described in the claims includes various modifications and changes of the specific examples exemplified above.

For example, in the above embodiment, the Rh layer is formed over 100% of the total length of the substrate 10, but the length $L_{23}$ of the Rh layer is not limited thereto. For example, the Rh layer may be formed with a length of 80% or more and less than 100% from the front side. In addition, the Rh layer may be formed with a length of 80% or more and less than 100% from the rear side.

In addition, in the above embodiment, the concentration of the precious metal catalyst in the Pd layer, the Pt layer, and the Rh layer is adjusted so that, for example, the change in the methane discharge amount due to addition of the alkaline earth metal element is likely to appear, but the concentration of the precious metal catalyst in the Pd layer, the Pt layer, and the Rh layer is not limited to the above example. The details of the configuration of the catalyst layer can be changed as long as the spirit of the present technology are not impaired.

In addition, for example, in the above embodiment, the internal combustion engine 2 is a CNG engine, but the internal combustion engine 2 may be an in-cylinder direct injection gasoline engine, an in-cylinder direct injection diesel engine, or the like that burns at a theoretical air fuel ratio. These internal combustion engines 2 may be configured so that F/C control, I/S control, or the like is performed by the ECU 7. In addition, these internal combustion engines 2 may be engines mounted in hybrid vehicles including a vehicle driving power source.

**Claims**

1. An exhaust gas purification catalyst configured to be disposed in an exhaust path of an internal combustion engine and purify an exhaust gas discharged from the internal combustion engine, comprising:

a substrate that divides cells through which an exhaust gas flows; and
a catalyst layer that is provided on a surface of the substrate, wherein
the catalyst layer includes
a palladium layer containing palladium that extends from a first end part which is an end part on a side of the cells into which an exhaust gas flows to a second end part which is an end part on a side of the cells from which an exhaust gas flows out,
a platinum layer containing platinum that extends from the second end part to the first end part,
a rhodium layer containing rhodium that is laminated with both the palladium layer and the platinum layer,
the palladium layer contains an alkaline earth metal at a content of 0.04 mol or more and 0.16 mol or less per 100 g of the palladium layer, and
in the platinum layer, an alkaline earth metal content per 100 g of the platinum layer is limited to 0.03 mol or less.

2. The exhaust gas purification catalyst according to claim 1, wherein the platinum layer does not substantially contain an alkaline earth metal.

3. The exhaust gas purification catalyst according to claim 1 or 2, wherein, in the palladium layer, the molar ratio of the alkaline earth metal with respect to the palladium is 1 or more and 3 or less.

4. The exhaust gas purification catalyst according to any one of claims 1 to 3, wherein the catalyst is used to purify an exhaust gas discharged from an internal combustion engine that uses natural gas as a fuel.

FIG.1

FIG.2

FIG.3

FIG.4

FIG.5

FIG.6

FIG.7

FIG.8

## INTERNATIONAL SEARCH REPORT

| International application No. |
|---|
| PCT/JP2020/010230 |

### A. CLASSIFICATION OF SUBJECT MATTER

Int.Cl. B01J35/04(2006.01)i, B01D53/94(2006.01)i, F01N3/10(2006.01)i, F02M21/02(2006.01)i, B01J23/63(2006.01)i
FI: B01J23/63AZAB, B01D53/94222, B01D53/94241, B01D53/94245, B01D53/94280, F01N3/10A, F02M21/02L, B01J35/04301L

According to International Patent Classification (IPC) or to both national classification and IPC

### B. FIELDS SEARCHED

Minimum documentation searched (classification system followed by classification symbols)
Int.Cl. B01J35/04, B01D53/94, F01N3/10, F02M21/02, B01J23/63

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2010-29752 A (NE CHEMCAT CORP.) 12.02.2010 (2010-02-12), claims, paragraphs [0017]-[0050], [0056]-[0070], fig. 1-4 | 1, 3-4 |
| A | entire text | 2 |
| Y | WO 2015/087872 A1 (CATALER CORPORATION) 18.06.2015 (2015-06-18), paragraphs [0028]-[0045], fig. 3 | 1, 3-4 |
| A | entire text | 2 |
| Y | WO 2017/204008 A1 (CATALER CORPORATION) 30.11.2017 (2017-11-30), paragraphs [0021], [0046], [0060], fig. 2 | 1, 3-4 |
| A | entire text | 2 |
| Y | JP 2013-119075 A (TOYOTA MOTOR CORPORATION) 17.06.2013 (2013-06-17), claims, paragraphs [0014], [0040]-[0042], [0050], [0051] | 1, 3-4 |
| A | entire text | 2 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18.05.2020 | 02.06.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/010230

C (Continuation).   DOCUMENTS CONSIDERED TO BE RELEVANT

| Category* | Citation of document, with indication, where appropriate, of the relevant passages | Relevant to claim No. |
|---|---|---|
| A | JP 9-57098 A (TOYOTA CENTRAL R&D LABS., INC.) 04.03.1997 (1997-03-04), entire text | 1-4 |
| A | JP 2010-179204 A (TOYOTA MOTOR CORPORATION) 19.08.2010 (2010-08-19), entire text | 1-4 |
| A | JP 2001-79402 A (NISSAN MOTOR CO., LTD.) 27.03.2001 (2001-03-27), entire text | 1-4 |
| A | JP 2015-6660 A (MAZDA MOTOR CORP.) 15.01.2015 (2015-01-15), entire text | 1-4 |

Form PCT/ISA/210 (second sheet) (January 2015)

INTERNATIONAL SEARCH REPORT

Information on patent family members

International application No.

PCT/JP2020/010230

| | | |
|---|---|---|
| JP 2010-29752 A | 12.02.2010 | US 2011/0041486 A1<br>claims, paragraphs [0024]-[0123],<br>[0136]-[0210], fig. 1-4<br>WO 2010/010747 A1<br>EP 2308592 A1<br>CN 102083531 A |
| WO 2015/087872 A1 | 18.06.2015 | US 2016/0199816 A1<br>paragraphs [0045]-[0067], fig. 3<br>EP 3034165 A1<br>CN 105517706 A |
| WO 2017/204008 A1 | 30.11.2017 | EP 3466541 A1<br>paragraphs [0022], [0047], [0061], fig. 2<br>CN 109153014 A |
| JP 2013-119075 A | 17.06.2013 | US 2013/0150236 A1<br>claims, paragraphs [0017], [0067]-[0071],<br>[0083], [0084]<br>CN 103157516 A |
| JP 9-57098 A | 04.03.1997 | (Family: none) |
| JP 2010-179204 A | 19.08.2010 | (Family: none) |
| JP 2001-79402 A | 27.03.2001 | US 6514905 B1<br>the whole sentence<br>EP 1066874 A1 |
| JP 2015-6660 A | 15.01.2015 | US 2016/0067690 A1<br>the whole sentence<br>WO 2014/192219 A1<br>CN 104661749 A |

Form PCT/ISA/210 (patent family annex) (January 2015)

**EP 3 932 550 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019061780 A
- JP 2011255378 A
- JP S59041706 A